# EUROPEAN PATENT APPLICATION

(11) **EP 4 531 181 A1**
(43) Date of publication of application: **02.04.2025**
(21) Application number: 24789094.0
(22) Date of filing: 12.04.2024
(51) Int. Cl.: H01M 50/242, H01M 10/04, H01M 50/204

(54) **CELL ASSEMBLY AND BATTERY PACK INCLUDING SAME**

(30) Priority: 14.04.2023 KR 20230049575
(71) Applicant: LG Energy Solution, Ltd., Seoul 07335 (KR)
(72) Inventor: LEE, Jae Hyun, Daejeon 34122 (KR); SHIN, Ju Hwan, Daejeon 34122 (KR); YANG, Chang Hyeon, Daejeon 34122 (KR); KIM, Ki Young, Daejeon 34122 (KR); LEE, Hyoung Suk, Daejeon 34122 (KR)
(74) Representative: Plasseraud IP
(86) International application number: PCT/KR2024/004986
(87) International publication number: WO 2024/215153

(57) **Abstract**

A cell assembly includes a cell block including a plurality of cells; a pair of reinforcement plates coupled to both sides of the cell block to support both sides of the cell block, and includes protrusion parts on the outer side surfaces, wherein the reinforcement plates include a first reinforcement plate coupled to one side of the cell block; and a second reinforcement plate coupled to the other side of the cell block, and the outer side surfaces of the first reinforcement plate and the outer side surfaces of the second reinforcement plate have an engaged shape with each other. Also, a battery pack includes the cell assembly; and a pack case including an accommodating part in which the cell assembly is accommodated. The cell assembly including a pair of reinforcement plates coupled to both sides to support the sides, wherein any one of a pair of cell assemblies accommodated adjacent to the accommodating part, characterized in that the first reinforcement plate and the second reinforcement plate are coupled to form an auxiliary separation wall.

## Description

### [Cross-Reference to Related Applications]

The present application is a national phase entry under of International Application No. filed on, which claims priority from Korean Patent Application No. 10-2023-0049575, filed on April 14, 2023, all of which are incorporated herein by reference.

### [Technical Field]

The present disclosure relates to a cell assembly and a battery pack including the same. More specifically, the present disclosure relates to a cell assembly having reinforcement plates supporting each side on both sides, and a battery pack accommodating the same.

### [Background Art]

The types of secondary batteries include lithium-ion batteries, lithium polymer batteries, nickel cadmium batteries, nickel hydrogen batteries, nickel zinc batteries, and the like. The operating voltage of such a unit secondary battery cell, in other words, a unit battery cell, is about 2.5V to 4.2V. Therefore, if a higher output voltage is required, a plurality of battery cells may be connected in series to form a battery pack. Also, depending on the charge and discharge capacity required for the battery pack, a plurality of battery cells may be connected in parallel to form a battery pack. Accordingly, the number of battery cells included in the above battery pack may be varied according to the required output voltage or charge/discharge capacity.

For example, when a plurality of battery cells is connected in series/parallel to form a battery pack, a battery module comprising a plurality of battery cells is first constructed.

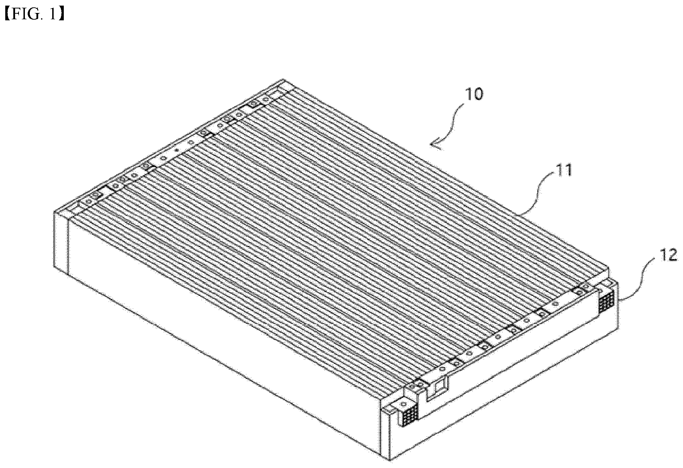

FIG. 1 illustrates one form of a commonly used cell assembly 10. The conventional cell assembly 10 includes a cell block 11 in which a plurality of cells is unidirectionally stacked as shown, with end plates 12 coupled to the front and rear of the cell assembly 10, respectively.

In one battery pack, a plurality of cell assemblies 10 shown in FIG. 1 may be accommodated.

Meanwhile, the cell assembly 10 included in the battery pack may generate a problem during the charging and discharging process, one of which may be a swelling phenomenon. The swelling phenomenon is a phenomenon in which the battery cell expands due to gas or the like generated inside the battery cell. The swelling phenomenon may proceed first in each battery cell unit accommodated in the cell assembly 10, and consequently affects the overall cell assembly 10. In particular, the swelling phenomenon may proceed throughout the overall cell assembly 10.

Accordingly, there is a need for a new method that can maximally suppress the shape deformation of the cell assembly 10 even if a swelling phenomenon occurs in each of the cell assemblies 10 stored in the pack case.

### [Summary]

### [Technical Problem]

Therefore, the present invention is directed to solving the above problems, and to provide a structure capable of reinforcing the sides of a cell assembly.

The present disclosure also aims to suppress the swelling phenomenon of a cell assembly stored in a pack case.

Other objects and advantages of the present invention will be understood from the following description, which will become more apparent from the embodiments of the present invention, and it will be easily understood that the objects and advantages of the present invention may be realized by the means and combinations thereof disclosed in the claims of the patent.

### [Technical Solution]

The present disclosure provides a cell assembly comprising: a cell block comprising a plurality of cells; a pair of reinforcement plates coupled to both sides of the cell block to support both sides of the cell block, and includes protrusion parts on the outer side surfaces, wherein the reinforcement plates include: a first reinforcement plate coupled to one side of the cell block; and a second reinforcement plate coupled to the other side of the cell block, wherein the outer side surfaces of the first reinforcement plate and the outer side surfaces of the second reinforcement plate have an engaged shape with each other.

The first reinforcement plate may include the protrusion part in a lower portion of the outer side surface and includes an upper step portion in an upper portion of the protrusion part, and the second reinforcement plate may include the protrusion part in an upper portion of the outer side surface and includes a lower step portion in a lower portion of the protrusion part.

The first reinforcement plate may include a horizontal insertion bar in an upper portion of the outer side surface, and the second reinforcement plate may include a horizontal insertion hole in an upper portion of the outer side surface, the horizontal insertion hole in the second reinforcement plate may be formed corresponding to the horizontal insertion bar of the first reinforcement plate to enable insertion of the horizontal insertion bar of the first reinforcement plate.

The first reinforcement plate further comprising a horizontal insertion hole in a lower portion of the outer side surface, and the second reinforcement plate further comprising a horizontal insertion bar in a lower portion of the outer side surface, wherein the horizontal insertion hole of the first reinforcement plate is formed corresponding to the horizontal insertion bar of the second reinforcement plate to enable insertion of the horizontal insertion bar of the second reinforcement plate.

The first reinforcement plate includes a vertical insertion bar in the upper step portion, and the second reinforcement plate includes a vertical insertion hole in the lower step portion, wherein the vertical insertion hole of the second reinforcement plate may be formed corresponding to the vertical insertion bar of the first reinforcement plate to enable insertion of the vertical insertion bar of the first reinforcement plate.

The first reinforcement plate includes a vertical insertion hole in the upper step portion, and the second reinforcement plate includes a vertical insertion bar in the lower step portion, wherein the vertical insertion hole of the first reinforcement plate may be formed corresponding to the vertical insertion bar of the second reinforcement plate to enable insertion of the vertical insertion bar of the second reinforcement plate.

The protrusion part may be formed extending along a length direction of the cell assembly.

The protrusion part may have a hollow structure.

The present disclosure provides a battery pack comprising: the cell assembly; and a pack case comprising an accommodating part in which the cell assembly is accommodated, wherein any one of a pair of cell assemblies accommodated adjacent to the accommodating part, characterized in that the first reinforcement plate and the second reinforcement plate are coupled to form an auxiliary separation wall.

The auxiliary separation wall may be coupled to the pack case by a coupling member that penetrates the auxiliary separation wall and is coupled to a bottom portion of the pack case.

The protrusion part may comprise coupling holes perforated through which the coupling member may penetrate, and the coupling holes included in the first reinforcement plate and the second reinforcement plate respectively included in the auxiliary separation wall may be provided at positions corresponding to each other.

The pack case comprising a base plate supporting a lower portion of the cell assembly,
wherein the base plate includes a bottom groove corresponding to a coupling hole position included in the auxiliary separation wall and formed to enable insertion of the coupling member, wherein the auxiliary separation wall may be coupled to the base plate by the coupling member penetrating the coupling hole and inserted into the bottom groove.

The first reinforcement plate may include the protrusion part in a lower portion of the outer side surface and include an upper step portion formed by the protrusion part in an upper portion, and the second reinforcement plate may include the protrusion part in an upper portion of the outer side surface and include a lower step portion formed by the protrusion part in a lower portion.

The first reinforcement plate may include a horizontal insertion bar in an upper portion of the outer side surface, and the second reinforcement plate may include a horizontal insertion hole in an upper portion of the outer side surface, wherein the first reinforcement plate of any one cell assembly included in the auxiliary separation wall may be coupled to the second reinforcement plate by inserting the horizontal insertion bar into the horizontal insertion hole included in the second reinforcement plate of the other cell assembly.

The first reinforcement plate includes a vertical insertion bar in the upper step portion, and the second reinforcement plate includes a vertical insertion hole in the lower step portion, wherein the first reinforcement plate of any one cell assembly included in the auxiliary separation wall is coupled to the second reinforcement plate by inserting the vertical insertion bar into the vertical insertion hole included in the second reinforcement plate of the other cell assembly.

### [Advantageous Effects]

According to the present disclosure, the swelling phenomenon of a cell assembly accommodated in a pack case can be effectively suppressed.

Further, the present disclosure can improve the assembly efficiency of a pack case by eliminating a separate sidewall configuration separating a cell assembly from a pack case.

### [Brief Description of the Drawings]

FIG. 1 illustrates a conventional cell assembly.
FIG. 2 is a diagram illustrating a pack case included in a battery pack of the present disclosure.
FIG. 3 is a perspective view illustrating a cell assembly included in a battery pack according to a first embodiment of the present disclosure.
FIG. 4 is a plan view of the cell assembly of FIG. 3.
FIG. 5 is a perspective view illustrating a modified example of a cell assembly.
FIG. 6 is a perspective view illustrating another modified example of a cell assembly.
FIG. 7 is a perspective view illustrating yet another modified example of a cell assembly.
FIG. 8 is a perspective view illustrating a first reinforcement plate coupled to one side of a cell assembly included in a battery pack according to a first embodiment of the present disclosure.
FIG. 9 illustrates a second reinforcement plate coupled to the other side of a cell assembly included in a battery pack according to a first embodiment of the present disclosure.
FIG. 10 illustrates a pair of cell assemblies included in a battery pack according to a first embodiment of the present disclosure.
FIG. 11 illustrates a pair of reinforcement plates disposed facing each other on the sides of a pair of adjacent disposed cell assemblies of FIG. 10.
FIG. 12 illustrates an auxiliary separation wall included in a battery pack according to a first embodiment of the present disclosure.
FIG. 13 illustrates the auxiliary separation wall of FIG. 12 coupled to the pack case.
FIG. 14 illustrates the process of inserting a coupling member into the coupling hole of the auxiliary separation wall of FIG. 13.
FIG. 15 illustrates a cell assembly and pack case included in a battery pack according to a first embodiment of the present disclosure.
FIG. 16 is a perspective view of a cell assembly included in a battery pack according to a second embodiment of the present disclosure.
FIG. 17 is a plan view of the cell assembly of FIG. 16.
FIG. 18 illustrates a pair of reinforcement plates disposed adjacently and included in a battery pack according to a second embodiment of the present disclosure.
FIG. 19 illustrates an auxiliary separation wall included in a battery pack according to a second embodiment of the present disclosure.
FIG. 20 illustrates a pair of reinforcement plates included in a battery pack according to a third embodiment of the present disclosure.
FIG. 21 illustrates a pair of reinforcement plates included in a battery pack according to a fourth embodiment of the present disclosure.
FIG. 22 illustrates a pair of reinforcement plates included in a battery pack according to a fifth embodiment of the present disclosure.
FIG. 23 illustrates a pair of reinforcement plates included in a battery pack according to a sixth embodiment of the present disclosure.

### [Detailed Description]

Hereinafter, the present disclosure will be described in detail with reference to the drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the disclosure in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

In addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present disclosure relates to a battery pack accommodating a cell assembly 100.

The battery pack of embodiments of the present disclosure includes a cell assembly 100 including a cell block 110 including a plurality of cells, and a pack case 200 comprising a accommodating part A in which the cell assembly 100 is accommodated.

The cell may be divided into a cylindrical cell, a prismatic cell, and a pouch-type cell according to the form of an electrode assembly and a battery case.

The cylindrical cell is a cell in which an electrode assembly is rolled in the form of a roll and inserted into a cylinder-shaped battery case.

The prismatic cell may be in the form of a stack in which the electrode assembly is stacked with electrodes and separators alternately stacked and may be in the form of a stack-folding in which the electrodes and the like are provided on a separator in the form of a sheet folded at regular intervals.

The prismatic cell in which an electrode assembly is inserted into a battery cell in the form of a square box.

The pouch-type cell in which an electrode assembly may be in the form of a stack or may be in the form of a stack-folding.

The pouch-type cell is wherein an electrode assembly is inserted into a pouch-type battery case. Thus, the cell block may include any one of cylindrical cells, prismatic cells, and pouch-type cells.

The cell assembly 100 comprises a cell block 110 and an end plate 120 coupled to the front and rear of the cell block 110, respectively, and a reinforcement plate 130 coupled to both sides of the cell block 110, respectively.

In some embodiments, the end plate 120 may further include terminals that electrically connect with the cell block 110. Each of the cell assemblies 100 may be connected through the terminals.

In some embodiments, the cell assembly 100 may further include a module frame that wraps around a perimeter of the cell block 110 such that each of the cells may be protected from external impact. In this case, the module frame may be provided to support or protect only a portion of the cell block 110 or may be provided to all of the portions of the cell block 110 that are exposed to completely block the cell block 110 from the outside.

In some embodiments, the module frame may further include terminals that electrically connect with the cell block 110. Each of the cell assemblies 100 may be connected through the terminals.

The battery pack of embodiments of the present disclosure may further include an upper cover coupling to the pack case 200 to cover an upper portion of each cell assembly 100 accommodated in the pack case 200.

Since the upper cover is covered by the prior art, a detailed description thereof is omitted in the present disclosure.

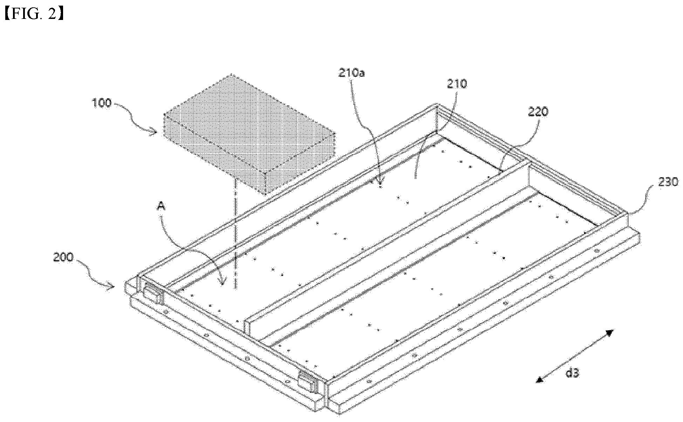

FIG. 2 is a diagram illustrating a pack case included in a battery pack of the present disclosure. The pack case 200 includes a base plate 210, as shown in FIG. 2.

The base plate 210 corresponds to the bottom of the pack case 200 and plays a role in supporting the lower portion of the cell assembly 100, which is seated on the upper portion.

In the base plate 210, a bottom groove 210a may be formed to enable a coupling member B to be inserted and screwed to it.

In some embodiments, the pack case 200 may include a sidewall 230.

The sidewalls 230 are coupled vertically along the perimeter of the edge of the base plate 210 and play a role in wrapping and protecting the outer side surface of the cell assembly 100 located on the base plate 210.

The pack case 200 includes an accommodating part A in which the cell assembly is accommodated.

The cell assembly 100 is seated in the accommodating part A.

According to some embodiments, the accommodating part A may be an inner space of the pack case 200 surrounded by the sidewalls 230.

According to some embodiments, the pack case 200 may include a main separation wall 220.

The main separation wall 220 is formed extending across the base plate 210 and is vertically coupled to a center portion of the base plate 210. The main separation wall 220 plays a role in dividing and separating the space inside the pack case 200 into largely two areas and may also play a role in protecting various conductors used inside the pack case 200 by inserting them therein.

According to some embodiments, the accommodating parts A may be divided and formed by the main separation wall 220 and the sidewalls 230. **In** this case, the pack case 200 may include a pair of accommodating parts A on both sides of the main separation wall 220, in which a plurality of cell assemblies 100 may be disposed and seated side-by-side along the length direction d3 of the main separation wall.

The cell assemblies 100 seated on both sides of the main separation wall 220 may be disposed symmetrically to each other with respect to the main separation wall 220.

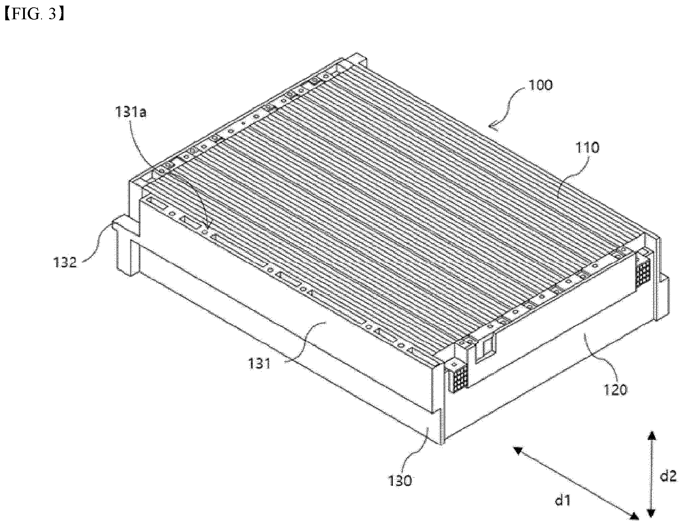

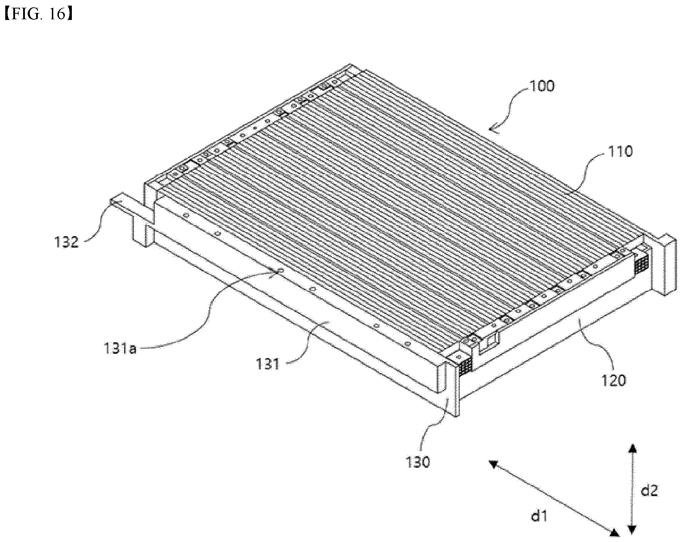

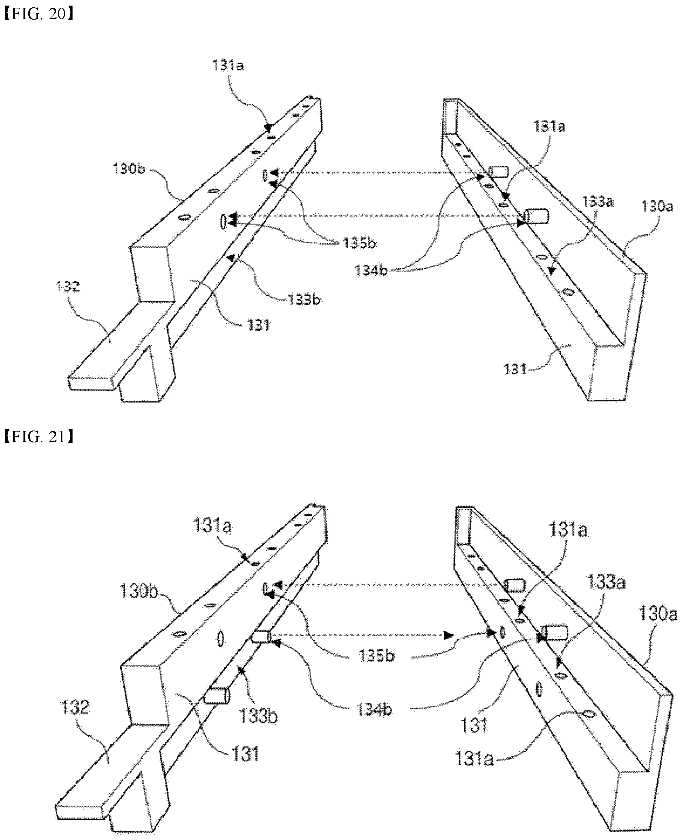

FIG. 3 to FIG. 15 relate to a battery pack according to a first embodiment of the present disclosure, FIG. 16 to FIG. 19 relate to a battery pack according to a second embodiment of the present disclosure, and FIG. 20 to FIG. 23 relate to a battery pack according to a third embodiment to a sixth embodiment of the present disclosure, respectively. Hereinafter, the battery pack of the present disclosure will be described in each of the embodiments with reference to the drawings.

For reference, directions such as front-to-back, up-down, left-right, and right-left to designate relative positions used in the following description are provided to assist the understanding of the disclosure and are based on the directions shown in the drawings unless otherwise defined.

In addition, the length direction of any configuration is referred to as the direction corresponding to the side having the longest length of the corresponding configuration shown in the drawings based on the horizontal direction, and the width direction of any configuration is referred to as the direction orthogonal to the length direction based on the horizontal direction.

### (First embodiment)

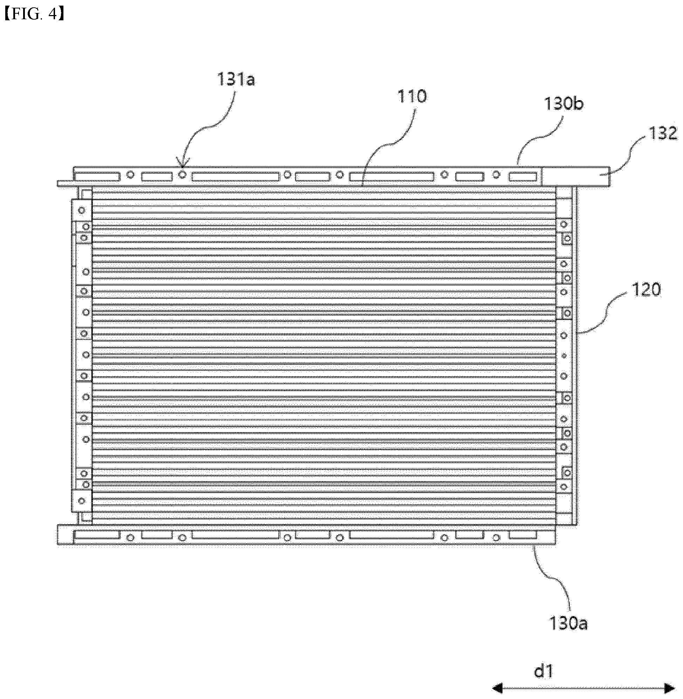

FIG. 3 is a perspective view illustrating a cell assembly 100 included in a battery pack according to a first embodiment of the present disclosure, FIG. 4 is a plan view of the cell assembly 100 of FIG. 3, and FIG. 5 to FIG. 7 are perspective views illustrating a modified example of a cell assembly 100.

FIG. 3 and FIG. 4 are a perspective view and a plan view, respectively illustrating a cell assembly 100 including a pouch-type cell.

The cell assembly 100 includes a cell block 110 having a plurality of cells stacked therein, as shown in FIG. 3, and an end plate 120 coupled to a front and rear of the cell block 110, respectively. In this case, the end plate 120 may further include terminals electrically connected to the cell block 110.

The cell assembly 100 includes a pair of reinforcement plates 130 coupled to both sides to support the sides of the cell block 110.

The reinforcement plate 130 may be coupled to the end plate 120. In this case, the reinforcement plate 130 may be coupled to the sides of the end plate 120 by separate screws or the like or may be fixed to the end plate 120 by an adhesive.

The battery pack of embodiments of the present disclosure is characterized in that a pair of cell assemblies 100 that are accommodated adjacent to each other in the pack case 200 are coupled with reinforcement plates 130 included on one side to form one auxiliary separation wall 240.

The reinforcement plate 130 forms a step and includes a protrusion part 131 projecting from the outer side surface.

The protrusion part 131 protrudes from one side of the reinforcement plate 130 to form a step along the height direction d2 of the cell assembly and extends along the length direction d1 of the cell assembly, as shown in FIG. 3. The protrusion part 131 includes coupling holes 131a perforated in a vertical direction to enable the coupling member B to penetrate and has a hollow structure in which the remaining portion is empty except for the coupling hole 131a.

The coupling member B may be, for example, a bolt with threads formed on the outer side surface.

The length of the coupling member B is preferably longer than the height of the reinforcement plate 130.

According to FIG. 3, the coupling holes 131a may be formed in a plurality along the length direction d1 of the cell assembly.

The reinforcement plate 130 comprises a first reinforcement plate 130a coupled to one side of a cell block 110 and a second reinforcement plate 130b coupled to the other side of the cell block 110, as shown in FIG. 4.

In other words, one cell assembly 100 is provided with the first reinforcement plate 130a and the second reinforcement plate 130b on both sides, respectively.

The first reinforcement plate 130a and the second reinforcement plate 130b differ in the position of the protrusion part 131.

The cell assembly 100 may include cells of various forms other than pouch-type cells.

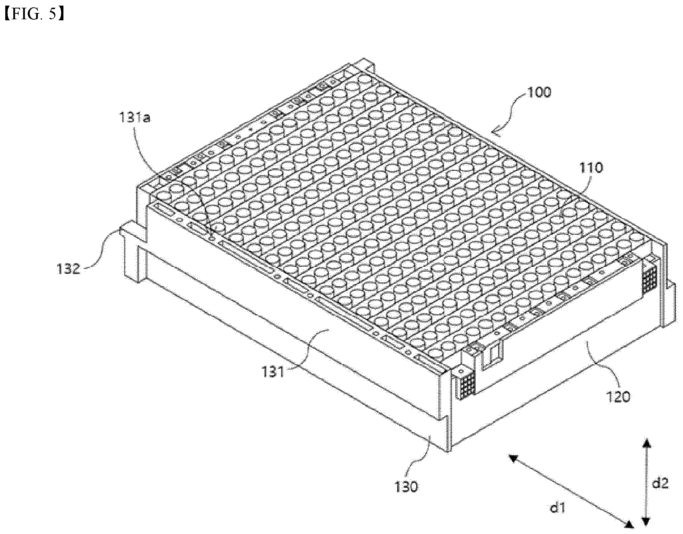

FIG. 5 is a perspective view illustrating a cell assembly 100 that includes cylindrical cells.

The cell assembly 100 includes a cell block 110 in which a plurality of cylindrical cells is arranged as shown in FIG. 5, and end plates 120 coupled to a front and rear of the cell block 110, respectively.

The cell assembly 100 includes a pair of reinforcement plates 130 coupled to both sides of the cell block 110 for supporting the sides of cell block 110.

The end plate 120 need not be limited to the shape of FIG. 5, it is sufficient if it is shaped to support the front and rear of the cell block 110.

The reinforcement plate 130 may be coupled to the end plate 120. In this case, the reinforcement plate 130 may be screwed to the sides of the end plate 120 by separate screws or the like or may be fixed to the end plate 120 by an adhesive.

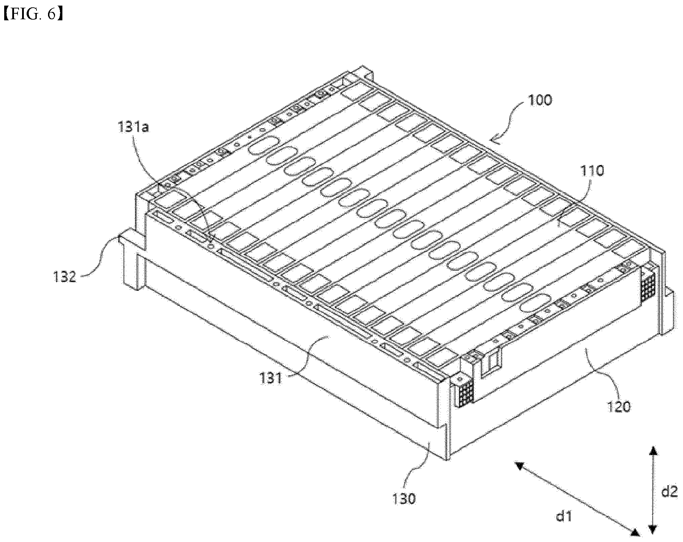

FIG. 6 is a perspective view illustrating a cell assembly 100 that includes prismatic cells.

The cell assembly 100 includes a cell block 110 arranged with a plurality of prismatic cells as shown in FIG. 6, and end plates 120 coupled to a front and rear of the cell block 110, respectively.

The cell assembly 100 includes a pair of reinforcement plates 130 coupled to both sides of the cell block 110 to support the sides of the cell block 110.

Here, each prismatic cell is arranged such that the length direction is horizontal to the length direction of the end plates.

The end plate 120 need not be limited to the shape of FIG. 5, it is sufficient if it is shaped to support the front and rear of the cell block 110.

The reinforcement plate 130 may be coupled to the end plate 120. In this case, the reinforcement plate 130 may be screwed to the sides of the end plate 120 by separate screws or the like or may be fixed to the end plate 120 by an adhesive.

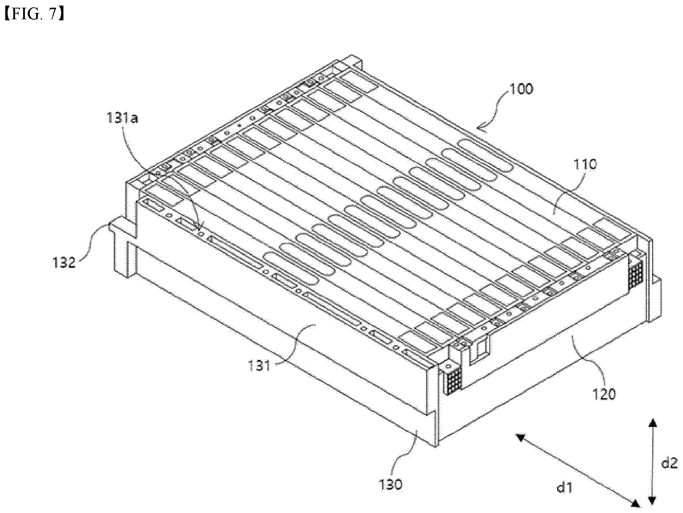

FIG. 7 is a perspective view illustrating another form of cell assembly 100 that includes prismatic cells.

The cell assembly 100 includes a cell block 110 arranged with a plurality of prismatic cells as shown in FIG. 7, and end plates 120 coupled to a front and rear of the cell block 110, respectively.

The cell assembly 100 includes a pair of reinforcement plates 130 coupled to both sides of the cell block 110 to support the sides of the cell block 110.

Here, each prismatic cell is arranged such that the length direction is horizontal to the length direction of the reinforcement plates 130.

The end plate 120 need not be limited to the shape of FIG. 7, it is sufficient if it is shaped to support the front and rear of the cell block 110.

The reinforcement plate 130 may be coupled to the end plate 120. In this case, the reinforcement plate 130 may be screwed to the sides of the end plate 120 by separate screws or the like or may be fixed to the end plate 120 by an adhesive.

A pair of reinforcement plates 130 included in one cell assembly 100 may have the shape of the protrusion parts 131 engaged with each other, in other words, one reinforcement plate 130 is formed in the upper portion of the protrusion parts 131 and the other reinforcement plate 130 is formed in the lower portion of the protrusion parts 131.

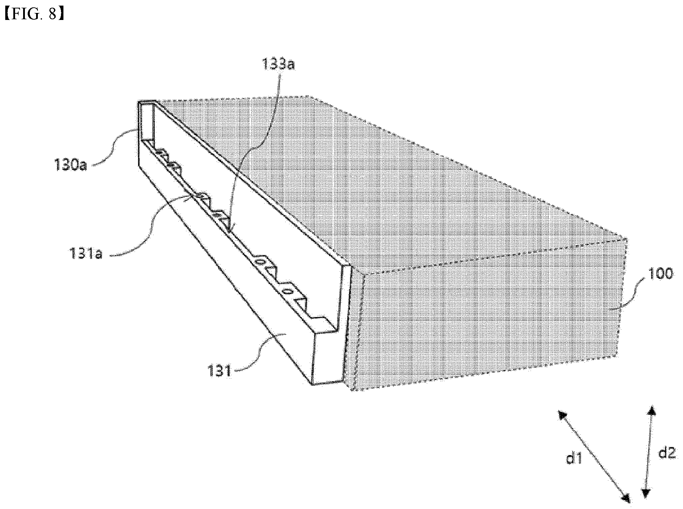

FIG. 8 illustrates a first reinforcement plate 130a coupled to one side of a cell assembly 100, referring to FIG. 8, the first reinforcement plate 130a has a protrusion part 131 formed on a lower portion of the reinforcement plate 130 and extending along a length direction d1 of the cell assembly.

The protrusion part 131 protrudes to form a step on one side of the reinforcement plate 130, wherein the first reinforcement plate 130a includes an upper step portion 133a formed by an upper portion corner of the protrusion part 131 formed on the lower portion. The upper step portion 133a is formed by extending in the length direction d1 of the cell assembly along the protrusion part 131.

The first reinforcement plate 130a comprises coupling holes 131a penetrating through the protrusion part 131 in a vertical direction. Specifically, the coupling holes 131a are formed on the upper step portion 133a.

In some embodiments, the plurality of coupling holes 131a are formed at predetermined intervals spaced apart along the length direction of the cell assembly 100.

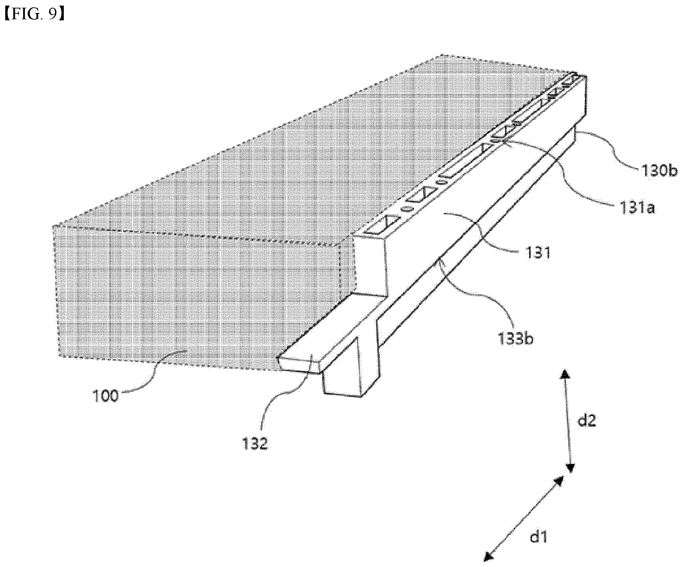

FIG. 9 illustrates a second reinforcement plate 130b coupled to the other side of the cell assembly 100, referring to FIG. 9, the second reinforcement plate 130b has a protrusion part 131 formed on an upper portion of the reinforcement plate 130 and extending along the length direction d1 of the cell assembly.

The second reinforcement plate 130b includes a lower step portion 133b formed by a lower portion corner of the protrusion part 131 formed on the upper portion. The lower step portion 133b is formed by extending in the length direction d1 of the cell assembly along the protrusion part 131.

When a pair of cell assemblies 100 are coupled by the reinforcement plates 130, a first reinforcement plate 130a included on one side of one of the cell assemblies 100 is coupled with a second reinforcement plate 130b included on the other of the cell assemblies 100.

The protrusion part 131 of the second reinforcement plate 130b is formed with a plurality of coupling holes 131a spaced apart at predetermined intervals and is preferably formed at a position corresponding to the position of the coupling holes 131a formed in the protrusion part 131 of the first reinforcement plate 130a based on the length direction d1 of the cell assembly.

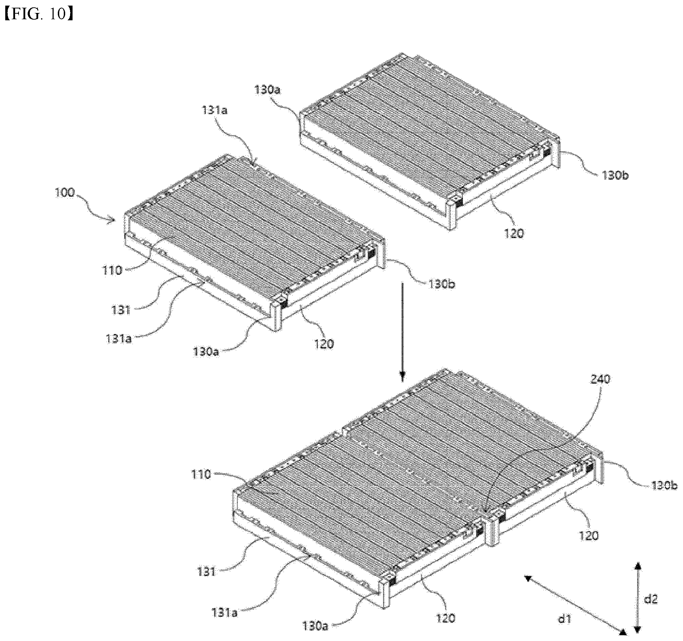

FIG. 10 illustrates a coupling process of a pair of adjacent disposed cell assemblies 100.

Here, a pair of reinforcement plates 130 formed on one side of each cell assembly 100 facing each other are coupled by overlapping the protrusion parts 131 with each other. Specifically, a first reinforcement plate 130a of one cell assembly 100 is coupled with a second reinforcement plate 130b of an adjacent other cell assembly 100, wherein the protrusion part 131 formed on a lower portion of the first reinforcement plate 130a and the protrusion part 131 formed on an upper portion of the second reinforcement plate 130b are coupled to engaged each other to form an auxiliary separation wall 240.

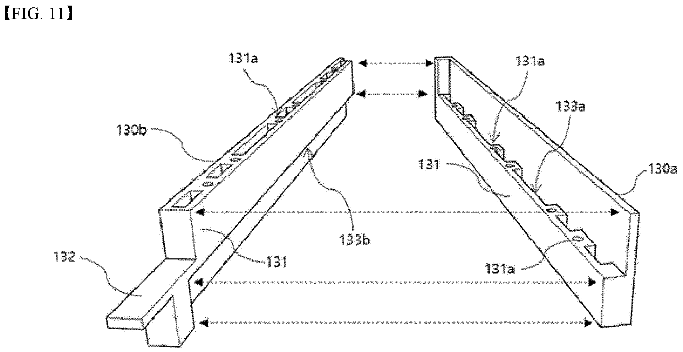

FIG. 11 illustrates a pair of reinforcement plates disposed facing each other on the sides of a pair of adjacent disposed cell assemblies of FIG. 10.

Referring to FIG. 11, each protrusion part 131 included in the first reinforcement plate 130a and the second reinforcement plate 130b is shaped to engage with each other. Specifically, one side of the first reinforcement plate 130a that faces the protrusion part 131 formed in the upper portion of the second reinforcement plate 130b is formed to correspond to the shape of the protrusion part 131 of the second reinforcement plate 130b, and one side of the second reinforcement plate 130b that faces the protrusion part 131 formed in the lower portion of the first reinforcement plate 130a is formed to correspond to the shape of the protrusion part 131 of the first reinforcement plate 130a. The first reinforcement plate 130a and the second reinforcement plate 130b may be coupled such that no gap occurs between them due to their corresponding shapes. In this case, by the coupling, the lower step portion 133b of the second reinforcement plate 130b is in contact with the upper step portion 133a of the first reinforcement plate 130a.

In addition, by the coupling, each coupling hole 131a included in the first reinforcement plate 130a is consistent with each coupling hole 131a included in the second reinforcement plate 130b.

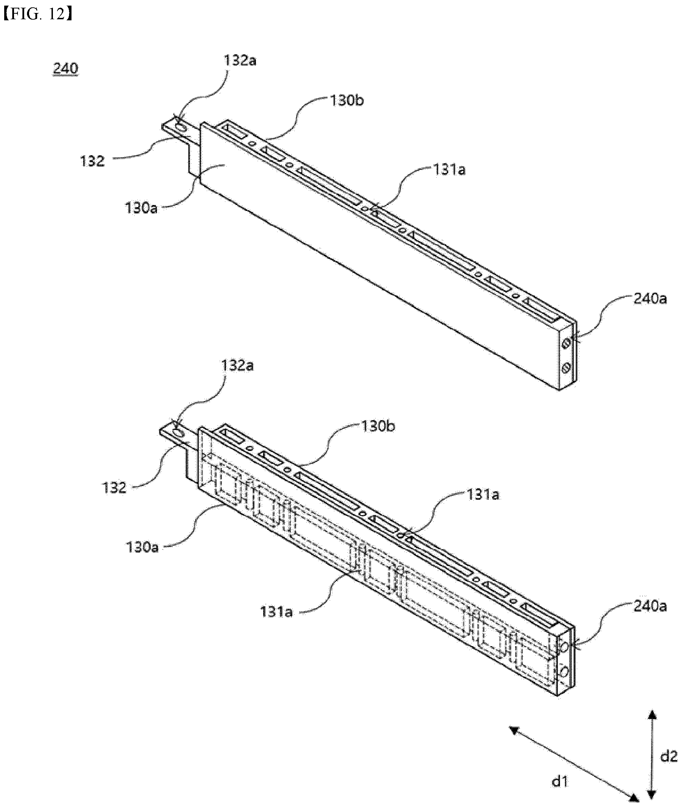

FIG. 12 illustrates an auxiliary separation wall 240 with first reinforcement plate 130a and second reinforcement plate 130b coupled thereto.

The auxiliary separation wall 240 of embodiments of the present disclosure has the first reinforcement plate 130a and the second reinforcement plate 130b coupled without gaps as shown in FIG. 12, and the positions of the respective coupling holes 131a of the first reinforcement plate 130a are consistent with each other such that each coupling hole 131a of the first reinforcement plate 130a is connected with each coupling hole 131a of the second reinforcement plate 130b.

According to some embodiments, the auxiliary separation wall 240 may include a protruding coupling part 132 at any one of both ends based on the length direction D1 of the cell assembly. Specifically, among the pair of reinforcement plates 130 forming the auxiliary separation wall 240, a second reinforcement plate 130b having a protrusion part 131 formed in an upper portion thereof includes a coupling part 132 protruding from any one of the front end and the rear end.

The second reinforcement plate 130b may further include an auxiliary coupling hole 132a penetrating through the coupling part 132 in a vertical direction.

According to some embodiments, the auxiliary separation wall 240 may include a thread groove 240a formed for coupling by insertion of a screw in a horizontal direction at any one of both ends based on the length direction d1 of the cell assembly. Specifically, the thread groove 240a is included in the end of the first reinforcement plate 130a.

The auxiliary separation wall 240 included in the battery pack of embodiments of the present disclosure may be coupled to at least one of the main separation wall 220, the sidewall 230, and the base plate 210 of the pack case 200.

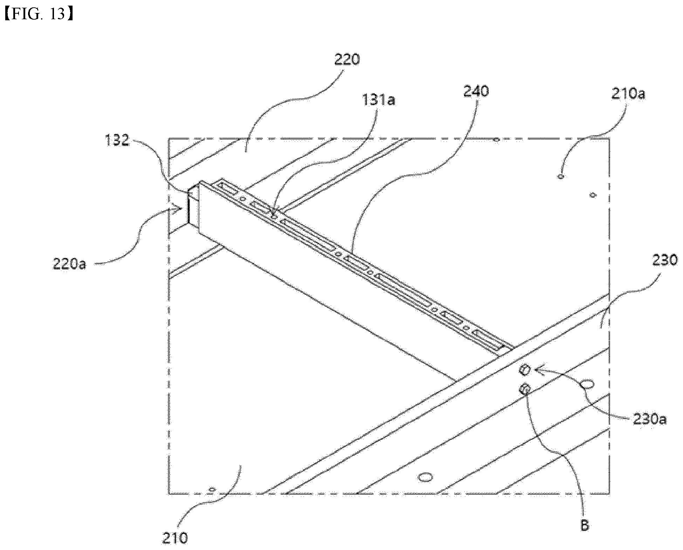

FIG. 13 illustrates a portion of the auxiliary separation wall 240 of FIG. 12 coupled to the pack case 200. (Although not shown for ease of understanding, cell blocks 110, and the like are coupled to both sides of the auxiliary separation wall 240.

Referring to FIG. 13, the main separation wall 220 includes a coupling groove 220a into which the coupling part 132 of the auxiliary separation wall 240 can be inserted on the one side in which the auxiliary separation wall 240 is disposed.

The auxiliary separation wall 240 is installed on the base plate 210 of the pack case 200 such that the coupling part 132 is inserted into the coupling groove 220a.

According to some embodiments, the main separation wall 220 may include an auxiliary coupling hole 132a formed at the bottom of the coupling groove 220a corresponding to the position of the auxiliary coupling hole 132a of the inserted coupling part 132.

The auxiliary separation wall 240 may be coupled and fixed to the main separation wall 220 by a screw that penetrates the auxiliary coupling hole 132a and is inserted into the auxiliary coupling groove 220a.

According to some embodiments, the sidewall 230 may comprise a screw hole 230a perforated at a position corresponding to the coupling groove 220a of the main separation wall 220 to enable the coupling member B to penetrate in a horizontal direction.

In this case, the auxiliary separation wall 240 is installed such that a thread groove 240a included in the end corresponds to a position of the screw hole 230a.

The auxiliary separation wall 240 may be coupled and fixed to the sidewall 230 by a screw penetrating through the screw hole 230a and inserted into the thread groove 240a.

The cell assembly 100 of embodiments of the present disclosure is characterized in that it is coupled to the pack case 200 by a coupling member B which penetrates the auxiliary separation wall 240 in a vertical direction and is screwed to the bottom portion of the pack case 200 and is supported on the sides by the coupling member B which penetrates the auxiliary separation wall 240.

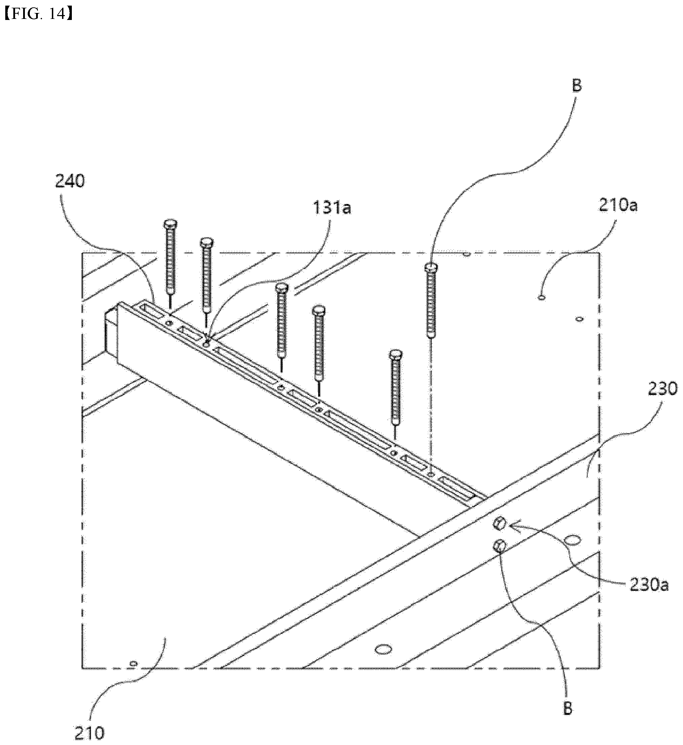

FIG. 14 illustrates the process of inserting the coupling member B into the coupling hole 131a of the auxiliary separation wall 240 of FIG. 13.

Referring to FIGS. 12 and, the base plate 210 of the pack case 200 corresponds to the position of the coupling hole 131a of the auxiliary separation wall 240, and includes a bottom groove 210a formed for insertion and coupling of the coupling member B.

The auxiliary separation wall 240 penetrates the coupling holes 131a of the first reinforcement plate 130a and the second reinforcement plate 130b and is coupled to the base plate 210 by a coupling member B inserted into the bottom groove 210a.

The coupling member B, which is inserted into the coupling hole 131a of the auxiliary separation wall 240, preferably has a length longer than the height of the auxiliary separation wall 240 so as to penetrate the coupling hole 131a and be inserted into the bottom groove 210a of the base plate 210.

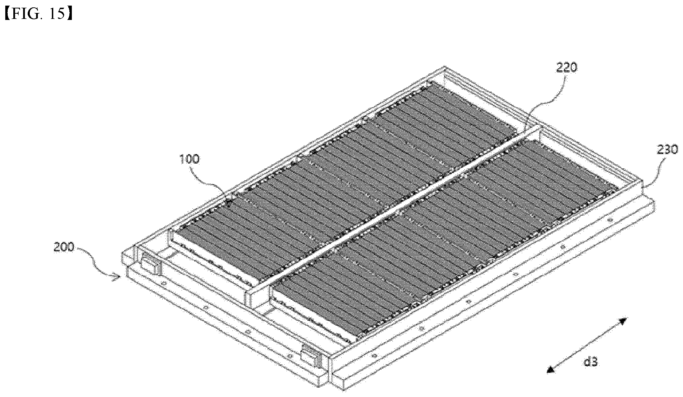

FIG. 15 shows a pack case 200 having a cell assembly 100 accommodated in an accommodating part A, and the cell assembly 100 installed in the accommodating part A is fixed to the pack case 200 by the auxiliary separation wall 240 and the coupling member B penetrating the auxiliary separation wall 240.

The battery pack of embodiments of the present disclosure can suppress deformation of the cell assembly 100, even though any one of the accommodated cell assemblies 100 may be swelling, primarily by the auxiliary separation wall 240 formed by the coupling of the two reinforcement plates 130. In addition, the deformation of the cell assembly 100 can be suppressed secondarily by a plurality of coupling members B vertically penetrating the auxiliary separation wall 240 and coupled to the base plate 210.

### (Second embodiment)

The cell assembly 100 included in the battery pack according to the second embodiment of the present disclosure differs from the cell assembly 100 of the battery pack according to the first embodiment in that the protrusion part 131 of the reinforcement plate 130 does not have a hollow structure.

Therefore, the auxiliary separation wall 240 included in the battery pack of the second embodiment is characterized by improved strength.

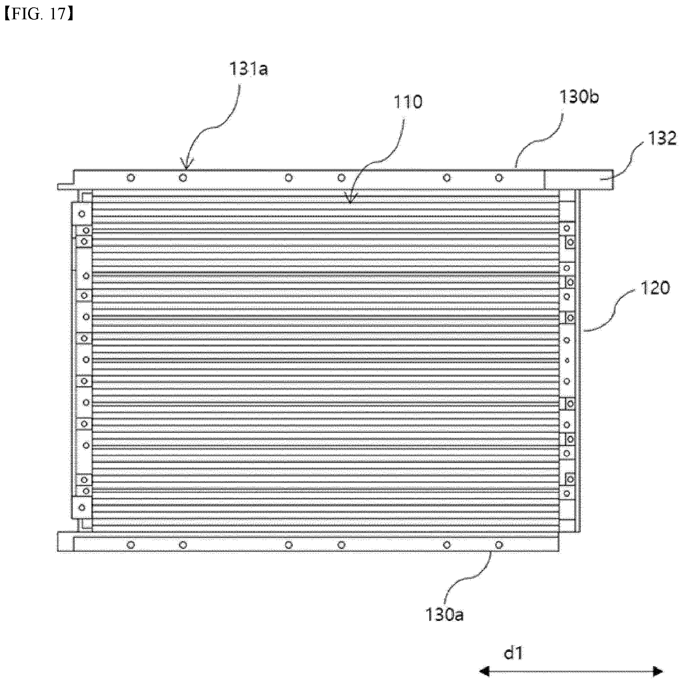

FIG. 16 is a perspective view of a cell assembly included in a battery pack according to a second embodiment of the present disclosure, and FIG. 17 is a plan view of the cell assembly of FIG. 16.

The cell assembly 100, as shown in FIG. 16 and FIG. 17, includes a cell block 110 having a plurality of cells stacked therein, and includes end plates 120 coupled to a front and rear of the cell block 110, respectively.

The cell assembly 100 includes a pair of reinforcement plates 130 coupled to both sides to support the sides of the cell block 110.

The reinforcement plates 130 may be coupled to the end plates 120. In this case, the reinforcement plates 130 may be coupled to the sides of the end plate 120 by separate screws or the like or may be fixed to the end plate 120 by an adhesive.

The battery pack of embodiments of the present disclosure comprises a pair of cell assemblies 100 accommodated adjacent to a pack case 200, coupled to form an auxiliary separation wall 240 by coupling reinforcement plates 130 included on one side.

The reinforcement plate 130 includes a protrusion part 131 that forms a step and protrudes.

The protrusion part 131, as shown in FIG. 16, protrudes from one side of the reinforcement plate 130 to form a step along the height direction d2 of the cell assembly, and extends along the length direction d1 of the cell assembly.

Referring to FIG. 16, the coupling holes 131a may be formed in a plurality along the length direction d1 of the cell assembly.

The reinforcement plate 130 comprises a first reinforcement plate 130a coupled to one side of the cell assembly 100 and a second reinforcement plate 130b coupled to the other side, as shown in FIG. 17.

The first reinforcement plate 130a and the second reinforcement plate 130b differ in the position of the protrusion part 131.

The first reinforcement plate 130a has the protrusion part 131 formed in a lower portion of the reinforcement plate 130, extending along the length direction d1 of the cell assembly.

The protrusion part 131 protrudes to form a step on one side of the reinforcement plate 130, and the first reinforcement plate 130a includes an upper step portion 133a formed by an upper corner of the protrusion part 131 formed on the lower portion. The upper step portion 133a is formed by extending in the length direction d1 of the cell assembly along the protrusion part 131.

The protrusion part 131 of the first reinforcement plate 130a is formed by a plurality of coupling holes 131a spaced apart at predetermined intervals.

The second reinforcement plate 130b includes a protrusion part 131 formed on an upper portion of the reinforcement plate 130 and extending along the length direction d1 of the cell assembly.

The second reinforcement plate 130b includes a lower step portion 133b formed by a lower portion corner of the protrusion part 131 formed on the upper portion. The lower step portion 133b is formed by extending in the length direction d1 of the cell assembly along the protrusion part 131.

When a pair of cell assemblies 100 are coupled by the reinforcement plates 130, a first reinforcement plate 130a included on one side of any one of the cell assemblies 100 is coupled to a second reinforcement plate 130b included on the one side of the other cell assembly 100.

The protrusion part 131 of the second reinforcement plate 130b is formed with a plurality of coupling holes 131a spaced apart at predetermined intervals, preferably at the same positions as the coupling holes 131a formed in the protrusion part 131 of the first reinforcement plate 130a based on the length direction d1 of the cell assembly.

In each of the cell assemblies 100 being coupled, a pair of reinforcement plates 130 formed on one side of each cell assembly 100 facing each other are coupled such that the protrusion parts 131 are engaged with each other. Specifically, the first reinforcement plate 130a of any one cell assembly 100 is coupled to the second reinforcement plate 130b of the other adjacent cell assembly 100. In this case, the protrusion parts 131 formed on the lower portion of the first reinforcement plate 130a and the protrusion parts 131 formed on the upper portion of the second reinforcement plate 130b are positioned to engage each other and are coupled to form one auxiliary separation wall 240.

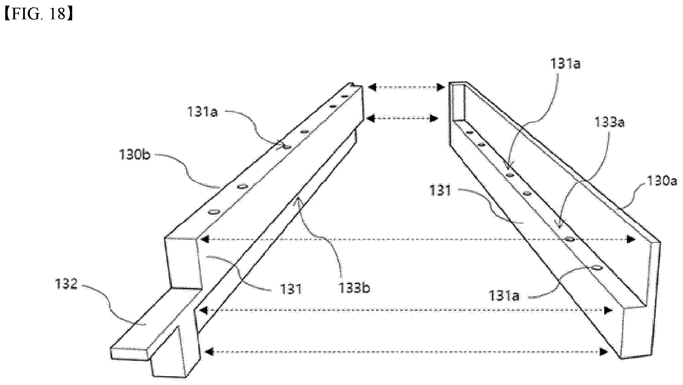

FIG. 18 illustrates a pair of reinforcement plates 130 disposed facing each other on the sides of a pair of adjacent disposed cell assemblies 100.

Referring to FIG. 18, the first reinforcement plate 130a and the second reinforcement plate 130b are formed to correspond to the shape of the protrusion part 131 formed on each of them. Specifically, one side of the first reinforcement plate 130a that faces the protrusion part 131 formed in the upper portion of the second reinforcement plate 130b is formed to correspond to the shape of the protrusion part 131 of the second reinforcement plate 130b, and one side of the second reinforcement plate 130b that faces the protrusion part 131 formed in the lower portion of the first reinforcement plate 130a is formed to correspond to the shape of the protrusion part 131 of the first reinforcement plate 130a.

The first reinforcement plate 130a and the second reinforcement plate 130b may be coupled so that no gap occurs between them due to the corresponding shapes. In this case, by the coupling, the lower step portion 133b of the second reinforcement plate 130b is in contact with the upper step portion 133a of the first reinforcement plate 130a.

Further, by the coupling, each coupling hole 131a included in the first reinforcement plate 130a is consistent with each coupling hole 131a included in the second reinforcement plate 130b.

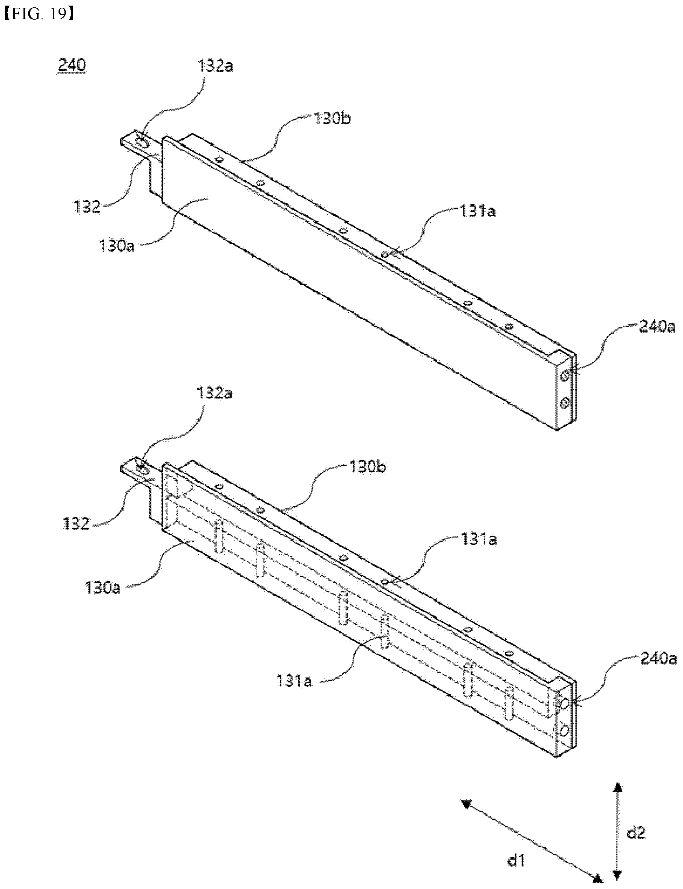

FIG. 19 illustrates an auxiliary separation wall 240 in which a first reinforcement plate 130a and a second reinforcement plate 130b are coupled.

The auxiliary separation wall 240 of embodiments of the present disclosure has a gapless coupling of the first reinforcement plate 130a and the second reinforcement plate 130b as shown in FIG. 19.

The respective coupling hole positions 131a are consistent with each other such that each coupling hole 131a of the first reinforcement plate 130a is connected with each coupling hole 131a of the second reinforcement plate 130b.

The auxiliary separation wall 240 included in the battery pack according to the second embodiment shown in FIG. 19 is coupled and fixed to the pack case 200 in the same manner as the auxiliary separation wall 240 included in the battery pack according to the first embodiment.

### (Third embodiment)

The cell assembly 100 included in the battery pack according to a third embodiment of the present disclosure includes a horizontal insertion bar 134b protruding in a horizontal direction on the reinforcement plate 130 and a horizontal insertion hole 135b formed in a horizontal direction on the outer side surface.

FIG. 20 illustrates a pair of reinforcement plates 130 included in a battery pack according to a third embodiment.

The horizontal insertion bars 134b and horizontal insertion holes 135b are formed on the outer side surfaces of the reinforcement plates 130, which are provided on both sides of the cell assembly 100 as shown in FIG. 20.

The horizontal insertion bars 134b are formed at a position where the protrusion parts 131 are not formed in each reinforcement plate 130.

The horizontal insertion bars 134b are formed at a predetermined spacing apart from the protrusion parts 131 at a position of any one of the upper portion and the lower portion of the protrusion parts 131.

Specifically, when the protrusion part 131 of the reinforcement plate 130 is formed in the upper portion, the horizontal insertion bar 134b is formed in the lower portion of the protrusion part 131. In addition, when the protrusion part 131 of the reinforcement plate 130 is formed in the lower portion, the horizontal insertion bar 134b is formed in the upper portion of the protrusion part 131.

The horizontal insertion hole 135b is formed at a position where the protrusion part 131 is formed in each reinforcement plate 130. Specifically, each horizontal insertion hole 135b is formed at a position corresponding to the horizontal insertion bar 134b of the other facing reinforcement plate 130.

A cell assembly included in a battery pack according to a third embodiment includes only one of the horizontal insertion bars 134a and the horizontal insertion holes 135b in each reinforcement plate 130.

When the horizontal insertion bar 134a is formed in the first reinforcement plate 130a, correspondingly, the horizontal insertion hole 135b is formed in the second reinforcement plate 130b. On the other hand, when the horizontal insertion bar 134b is formed in the second reinforcement plate 130b, correspondingly, the horizontal insertion hole 13b is formed in the first reinforcement plate 130a.

In other words, in some embodiments, the cell assembly 100 of embodiments of the present disclosure includes a horizontal insertion bar 134b in an upper portion of the outer side surface of the first reinforcement plate 130a and a horizontal insertion hole 135b in an upper portion of the outer side surface of the second reinforcement plate 130b.

In this case, the horizontal insertion hole 135b of the second reinforcement plate 130b is formed correspondingly to the horizontal insertion bar 134b of the first reinforcement plate 130a such that the horizontal insertion bar 134b of the first reinforcement plate 130a can be inserted therein.

In another embodiment, the cell assembly 100 of embodiments of the present disclosure includes a horizontal insertion hole in a lower portion of the outer side surface of the first reinforcement plate and a horizontal insertion bar in a lower portion of the outer side surface of the second reinforcement plate.

In this case, the horizontal insertion hole of the first reinforcement plate is formed corresponding to the horizontal insertion bar of the second reinforcement plate such that the horizontal insertion bar of the second reinforcement plate can be inserted therein.

The first reinforcement plate of any one of the cell assemblies 110 included in the auxiliary separation wall 240 is coupled to the second reinforcement plate by inserting the horizontal insertion bar into the horizontal insertion hole of the second reinforcement plate of the other one of the cell assemblies 110.

Accordingly, the pair of cell assemblies 100 may be firstly coupled and fixed by the horizontal insertion bar 134b and the horizontal insertion hole 135b.

A battery pack according to a third embodiment of the present disclosure may also be seated in the pack case at once with each cell assembly 100 coupled in advance by coupling of the horizontal insertion bars 134b and horizontal insertion holes 135b of the reinforcement plate 130.

In addition, the horizontal insertion bar 134b inserted into the horizontal insertion hole 135b regulates the respective reinforcement plate 130 from moving in a horizontal direction or shaking. Thus, the reinforcement plate 130 and each cell assembly 100 including the reinforcement plate 130 can be stably fixed in a horizontal direction by the horizontal insertion bars 134b and the horizontal insertion holes 135b.

### (Fourth embodiment)

The cell assembly 100 included in the battery pack according to a fourth embodiment of the present disclosure includes a horizontal insertion bar 134b protruding in a horizontal direction from the reinforcement plate 130 and a horizontal insertion hole 135b formed in a horizontal direction on the outer side surface.

FIG. 21 illustrates a pair of reinforcement plates included in a battery pack according to a fourth embodiment of the present disclosure.

The horizontal insertion bars 134b and horizontal insertion holes 135b are formed on the outer side surfaces of the reinforcement plates 130 provided on both sides of the cell assembly 100, respectively, as shown in FIG. 21.

The pair of reinforcement plates 130 provided on both sides of the cell assembly 100 include protrusion parts 131 in upper portion and lower portion, respectively.

The horizontal insertion bar 134b is formed at a position where the protrusion parts 131 are not formed in each reinforcement plate 130. Specifically, when the protrusion part 131 of the reinforcement plate 130 is formed in the upper portion, the horizontal insertion bar 134b is formed in the lower portion of the protrusion part 131. Further, when the protrusion part 131 of the reinforcement plate 130 is formed in the lower portion, the horizontal insertion bar 134b is formed in the upper portion of the protrusion part 131.

The horizontal insertion hole 135b is formed at a position where the protrusion part 131 is formed in each reinforcement plate 130. Specifically, each horizontal insertion hole 135b is formed at a position corresponding to a horizontal insertion bar 134b of the other facing reinforcement plate 130.

The cell assemblies included in the battery pack according to the fourth embodiment may be such that each reinforcement plate 130 simultaneously includes horizontal insertion bars 134a and horizontal insertion holes 135b.

Thus, when a pair of adjacent cell assemblies 100 are coupled, the horizontal insertion bar 134b of each reinforcement plate 130 is inserted into the horizontal insertion hole 135b of the other reinforcement plate 130. Accordingly, a pair of cell assemblies 100 may be coupled and fixed by the horizontal insertion bars 134b and horizontal insertion holes 135b.

In other words, in some embodiments, the cell assembly 100 of the present disclosure includes a horizontal insertion bar 134b in an upper portion of the outer side surface of the first reinforcement plate 130a and a horizontal insertion hole 135b in an upper portion of the outer side surface of the second reinforcement plate 130b. Further, the first reinforcement plate further includes a horizontal insertion hole in a lower portion of the outer side surface, and the second reinforcement plate further includes a horizontal insertion bar in a lower portion of the outer side surface.

The battery pack according to a fourth embodiment of the present disclosure can also be seated in the pack case at once with each cell assembly 100 coupled in advance by the coupling of the horizontal insertion bars 134b and the horizontal insertion holes 135b of the reinforcement plate 130.

In addition, the horizontal insertion bars 134b inserted in the horizontal insertion holes 135b regulate the respective reinforcement plate 130 from moving in a horizontal direction or shaking. Thus, the reinforcement plate 130 and each cell assembly 100 including the reinforcement plate 130 can be stably fixed in a horizontal direction by the horizontal insertion bar 134b and the horizontal insertion hole 135b.

### (Fifth embodiment)

The cell assembly 100 included in the battery pack according to a fifth embodiment of the present disclosure includes a vertical insertion bar 134a protruding in a vertical direction from the reinforcement plate 130 and a vertical insertion hole 135a formed in a vertical direction.

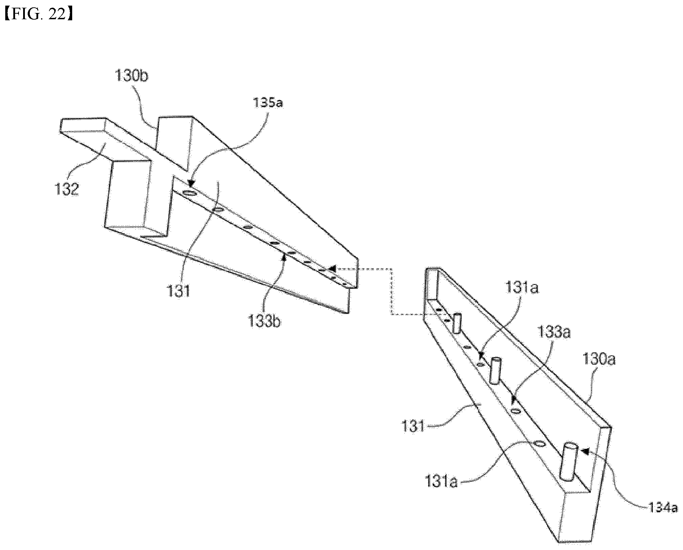

FIG. 22 illustrates a pair of reinforcement plates included in a battery pack according to a fifth embodiment of the present disclosure.

The vertical insertion bar 134a and vertical insertion hole 135a are formed in the reinforcement plates 130 provided on both sides of the cell assembly 100, respectively, as shown in FIG. 22.

Any one of the pair of reinforcement plates 130 provided on both sides of the cell assembly 100 includes a vertical insertion bar 134a, and the other includes a vertical insertion hole 135a.

The vertical insertion bar 134a and the vertical insertion hole 135a are formed in any one of the upper portion and the lower portion of the protrusion part 131. Specifically, in the case of a reinforcement plate 130 of the pair of reinforcement plates 130 in which the protrusion part 131 is formed in the upper portion, the vertical insertion bar 134a is formed to extend downwardly from the lower portion of the protrusion part 131, in other words, from the lower step portion 133b.

In addition, in the case of the other reinforcement plate 130 with the protrusion part 131 formed in the lower portion, the vertical insertion hole 135a is formed in the upper portion of the protrusion part 131, in other words, from the upper step portion 133a, at a position corresponding to the vertical insertion bar 134a of the other cell assembly 100.

In other words, in some embodiments, the cell assembly 100 of embodiments of the present disclosure includes the vertical insertion bar in the upper step portion of the first reinforcement plate and the vertical insertion hole in a lower portion of the second reinforcement plate.

In this case, the vertical insertion hole of the second reinforcement plate is formed correspondingly to the vertical insertion bar of the first reinforcement plate such that the vertical insertion bar of the first reinforcement plate can be inserted therein.

In another embodiment, the cell assembly 100 of embodiments of the present disclosure includes the vertical insertion hole in the upper step portion of the first reinforcement plate and the vertical insertion bar in the lower step portion of the second reinforcement plate.

In this case, the vertical insertion hole of the first reinforcement plate is formed correspondingly to the vertical insertion bar of the second reinforcement plate such that the vertical insertion bar of the second reinforcement plate can be inserted therein.

The first reinforcement plate of any one of the cell assemblies 100 included in the auxiliary separation wall 240 is coupled to the second reinforcement plate by inserting the vertical insertion bar into the vertical insertion hole included in the second reinforcement plate of the other one of the cell assemblies 100.

Accordingly, the pair of cell assemblies may be firstly coupled and fixed by the vertical insertion bar and the vertical insertion hole.

However, in the battery pack according to the fifth embodiment, differ from the battery packs of the third and fourth embodiments, the pair of cell assemblies 100 are coupled by moving in a top and bottom direction.

The battery pack according to a fifth embodiment of the present disclosure can also be seated in the pack case at once with each cell assembly 100 coupled in advance by the coupling of the vertical insertion bar and the vertical insertion hole of the reinforcement plate 130.

In addition, the vertical insertion bar 134a inserted in the vertical insertion hole 135a regulate the respective reinforcement plate 130 from moving in a horizontal direction or shaking. Thus, the reinforcement plate 130 and each cell assembly 100 including the reinforcement plate 130 can be stably fixed in a horizontal direction by the vertical insertion bar 134a and the vertical insertion hole 135a.

### (Sixth embodiment)

The cell assembly 100 included in the battery pack according to a sixth embodiment of the present disclosure includes a vertical insertion bar 134a protruding in a vertical direction from the reinforcement plate 130 and a vertical insertion hole 135a formed in a vertical direction. In particular, it is characterized that both the vertical insertion bar 134a and the vertical insertion hole 135a are formed in any one of the reinforcement plates 130.

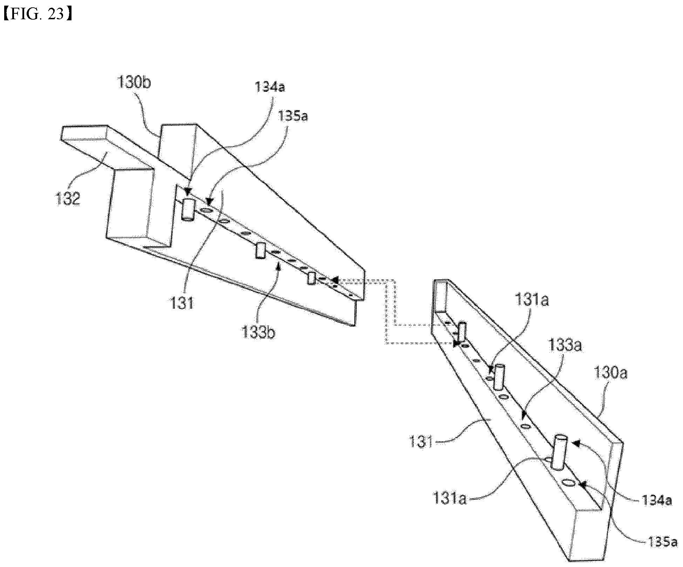

FIG. 23 illustrates a pair of reinforcement plates included in a battery pack according to a sixth embodiment of the present disclosure.

The vertical insertion bars 134a and vertical insertion holes 135a are formed on the outer side surfaces of the reinforcement plates 130 provided on both sides of the cell assembly 100, respectively, as shown in FIG. 23.

Each reinforcement plate 130 provided on both sides of the cell assembly 100 includes both the vertical insertion bars 134a and the vertical insertion holes 135a.

Among the pair of reinforcement plates 130, in the case of the reinforcement plate 130 with the protrusion part 131 formed on the upper portion, the vertical insertion bar 134a and the vertical insertion hole 135a are formed on the lower portion of the protrusion part 131, in other words, the lower step portion 133b. On the other hand, in the case of the reinforcement plate 130 with the protrusion part 131 formed in the lower portion, the vertical insertion bar 134a and the vertical insertion hole 135a are formed in the upper portion of the protrusion part 131, that is, the upper step portion 133a.

In this case, each vertical insertion bar 134a and vertical insertion hole 135a formed in any one of the reinforcement plates 130 corresponds to a vertical insertion hole 135a and vertical insertion bar 134a position formed in the other reinforcement plate 130 to be coupled.

Specifically, as shown in FIG. 23, the vertical insertion bars 134a and vertical insertion holes 135a formed toward the lower portion in the reinforcement plates 130 including the protrusion part 131 in the upper portion correspond to each other with the vertical insertion holes 135a and vertical insertion bars 134a formed toward the upper portion in the reinforcement plates 130 including the protrusion part 131 in the lower portion.

Therefore, the vertical insertion bar 134a of each reinforcement plate 130 is inserted into the corresponding vertical insertion hole 135a, thereby coupling the pair of reinforcement plates 130.

In other words, in some embodiments, the cell assembly 100 of embodiments of the present disclosure includes the vertical insertion bar in an upper step portion of the first reinforcement plate and the vertical insertion hole in a lower portion of the second reinforcement plate. Further, the first reinforcement plate further includes the vertical insertion hole in the upper step portion, and the second reinforcement plate further includes the vertical insertion bar in the lower step portion.

The battery pack according to a sixth embodiment, as in the battery pack of the fifth embodiment, the coupling is performed by moving the pair of cell assemblies 100 in a top and bottom direction.

In addition, the vertical insertion bar 134a inserted in the vertical insertion hole 135a regulate the respective reinforcement plate 130 from moving in a horizontal direction or shaking. Thus, the reinforcement plate 130 and each cell assembly 100 including the reinforcement plate 130 can be stably fixed in a horizontal direction by the vertical insertion bar 134a and the vertical insertion hole 135a.

As described above, the present disclosure has been described in more detail with reference to the accompanying drawings and the embodiments. Therefore, the configurations described herein or shown in the drawings are merely one embodiment of the present disclosure and do not represent all the technical spirit of the present disclosure such that it should be understood that there may be various equivalents and modifications capable of substituting the embodiments and the configurations at the time of filing the present application.

### [Description of Reference Numerals]

10: (conventional art) cell assembly
11: (conventional art) cell block
12: (conventional art) end plate
100: cell assembly
110: cell block
120: end plate
130: reinforcement plate
130a: first reinforcement pate
130b: second reinforcement plate
131: protrusion part
131a: coupling hole
132: coupling part
132a: auxiliary coupling hole
133: step portion
133a: upper step portion
133b: lower step portion
134a: vertical insertion bar
134b: horizontal insertion bar
135a: vertical insertion hole
135b: horizontal insertion hole
200: pack case
210: base plate
210a: bottom groove
220: main separation wall
220a: coupling groove
230: sidewall
230a: screw hole
240: auxiliary separation wall
240a: thread groove
A: accommodating part
B: coupling member
d1: cell assembly length direction
d2: cell assembly height direction
d3: main separation wall length direction

## Claims

1. A cell assembly comprising: a cell block comprising a plurality of cells;
a pair of reinforcement plates coupled to both sides of the cell block to support both sides of the cell block, and comprises protrusion parts on the outer side surfaces,
wherein the reinforcement plates comprise:
a first reinforcement plate coupled to one side of the cell block; and
a second reinforcement plate coupled to the other side of the cell block,
wherein the outer side surfaces of the first reinforcement plate and the outer side surfaces of the second reinforcement plate have an engaged shape with each other.

2. The cell assembly of claim 1, wherein the first reinforcement plate comprises the protrusion part in a lower portion of the outer side surface and comprises an upper step portion in an upper portion of the protrusion part, and
the second reinforcement plate comprises the protrusion part in an upper portion of the outer side surface and comprises a lower step portion in a lower portion of the protrusion part.

3. The cell assembly of claim 2, wherein the first reinforcement plate comprises a horizontal insertion bar in an upper portion of the outer side surface, and
the second reinforcement plate comprises a horizontal insertion hole in an upper portion of the outer side surface,
wherein the horizontal insertion hole in the second reinforcement plate is formed corresponding to the horizontal insertion bar of the first reinforcement plate to enable insertion of the horizontal insertion bar of the first reinforcement plate.

4. The cell assembly of claim 3, wherein the first reinforcement plate further comprising a horizontal insertion hole in a lower portion of the outer side surface, and
the second reinforcement plate further comprising a horizontal insertion bar in a lower portion of the outer side surface,
wherein the horizontal insertion hole of the first reinforcement plate is formed corresponding to the horizontal insertion bar of the second reinforcement plate to enable insertion of the horizontal insertion bar of the second reinforcement plate.

5. The cell assembly of claim 2, wherein the first reinforcement plate further comprising a horizontal insertion hole in a lower portion of the outer side surface, and
the second reinforcement plate further comprising a horizontal insertion bar in a lower portion of the outer side surface,
wherein the horizontal insertion hole of the first reinforcement plate is formed corresponding to the horizontal insertion bar of the second reinforcement plate to enable insertion of the horizontal insertion bar of the second reinforcement plate.

6. The cell assembly of claim 2, wherein the first reinforcement plate comprises a vertical insertion bar in the upper step portion, and
the second reinforcement plate comprises a vertical insertion hole in the lower step portion,
wherein the vertical insertion hole of the second reinforcement plate is formed corresponding to the vertical insertion bar of the first reinforcement plate to enable insertion of the vertical insertion bar of the first reinforcement plate.

7. The cell assembly of claim 6, wherein the first reinforcement plate comprises a vertical insertion hole in the upper step portion, and
the second reinforcement plate comprises a vertical insertion bar in the lower step portion,
wherein the vertical insertion hole of the first reinforcement plate is formed corresponding to the vertical insertion bar of the second reinforcement plate to enable insertion of the vertical insertion bar of the second reinforcement plate.

8. The cell assembly of claim 2, wherein the first reinforcement plate comprises a vertical insertion hole in the upper step portion, and
the second reinforcement plate comprises a vertical insertion bar in the lower step portion,
wherein the vertical insertion hole of the first reinforcement plate is formed corresponding to the vertical insertion bar of the second reinforcement plate to enable insertion of the vertical insertion bar of the second reinforcement plate.

9. The cell assembly of claim 1, wherein the protrusion part is formed extending along a length direction of the cell assembly.

10. The cell assembly of claim 1, wherein the protrusion part has a hollow structure.

11. A battery pack comprising: the cell assembly of claim 1; and
a pack case comprising an accommodating part in which the cell assembly is accommodated,
wherein any one of a pair of cell assemblies accommodated adjacent to the accommodating part, **characterized in that** the first reinforcement plate and the second reinforcement plate are coupled to form an auxiliary separation wall.

12. The battery pack of claim 11, wherein the auxiliary separation wall is coupled to the pack case by a coupling member that penetrates the auxiliary separation wall and is coupled to a bottom portion of the pack case.

13. The battery pack of claim 12, wherein the protrusion part comprise coupling holes perforated through which the coupling member in enable to penetrate, and
the coupling holes included in the first reinforcement plate and the second reinforcement plate respectively included in the auxiliary separation wall are provided at positions corresponding to each other.

14. The battery pack of claim 13, wherein the pack case comprises a base plate supporting a lower portion of the cell assembly,
wherein the base plate comprises a bottom groove corresponding to a coupling hole position included in the auxiliary separation wall and formed to enable insertion of the coupling member,
wherein the auxiliary separation wall is coupled to the base plate by the coupling member penetrating the coupling hole and inserted into the bottom groove.

15. The battery pack of claim 11, wherein the first reinforcement plate comprises the protrusion part in a lower portion of the outer side surface and comprises an upper step portion formed by the protrusion part in an upper portion, and
the second reinforcement plate comprises the protrusion part in an upper portion of the outer side surface and include a lower step portion formed by the protrusion part in a lower portion.

16. The battery pack of claim 15, wherein the first reinforcement plate comprises a horizontal insertion bar in an upper portion of the outer side surface, and
the second reinforcement plate comprises a horizontal insertion hole in an upper portion of the outer side surface,
wherein the first reinforcement plate of any one cell assembly included in the auxiliary separation wall is coupled to the second reinforcement plate by inserting the horizontal insertion bar into the horizontal insertion hole included in the second reinforcement plate of the other cell assembly.

17. The battery pack of claim 15, wherein the first reinforcement plate comprises a vertical insertion bar in the upper step portion, and
the second reinforcement plate comprises a vertical insertion hole in the lower step portion,
wherein the first reinforcement plate of any one cell assembly included in the auxiliary separation wall is coupled to the second reinforcement plate by inserting the vertical insertion bar into the vertical insertion hole included in the second reinforcement plate of the other cell assembly.
